# EUROPEAN PATENT APPLICATION

(11) **EP 4 588 652 A1**
(43) Date of publication of application: **23.07.2025**
(21) Application number: 25152376.7
(22) Date of filing: 16.01.2025
(51) Int. Cl.: B32B 3/06, B32B 3/08, B32B 3/26, B32B 7/12, B32B 9/00, B32B 17/00, B32B 21/14, B32B 27/06, E06B 3/00, E06B 5/00

(54) **METHOD FOR PROVIDING MULTILAYER TOPS FOR TABLES AND DOORS AND FURNISHINGS AND PARTITIONS, AND MULTILAYER TOPS FOR TABLES AND DOORS AND FURNISHINGS AND PARTITIONS**

(30) Priority: 19.01.2024 IT 202400000918
(71) Applicant: AT International S.r.l., 33070 Brugnera (PN) (IT)
(72) Inventor: LOVISA, Matteo Martin, 33170 PORDENONE (IT)
(74) Representative: Modiano, Micaela Nadia

(57) **Abstract**

A method for providing multilayer tops for tables and doors and furnishings and partitions, and multilayer tops for tables and doors and furnishings and partitions, that comprises the steps of:
- obtaining a first, upper planar element (2) made of ceramic material or glass or laminate or veneer or sheet metal or laminated plastic;
- obtaining a second, lower planar element (3) made of ceramic material or glass or laminate or sheet metal or laminated plastic, on which at least one through seat (4) is then obtained;
- inserting a complementarily-shaped insert, such as a bushing (8), into each through seat (4);
- coupling the first, upper planar element (2) and the second, lower planar element (3) so as to obtain a multilayer top (1).

## Description

The present application relates to a method for providing multilayer tops for tables and doors and furnishings and partitions, and multilayer tops for tables and doors and furnishings and partitions.

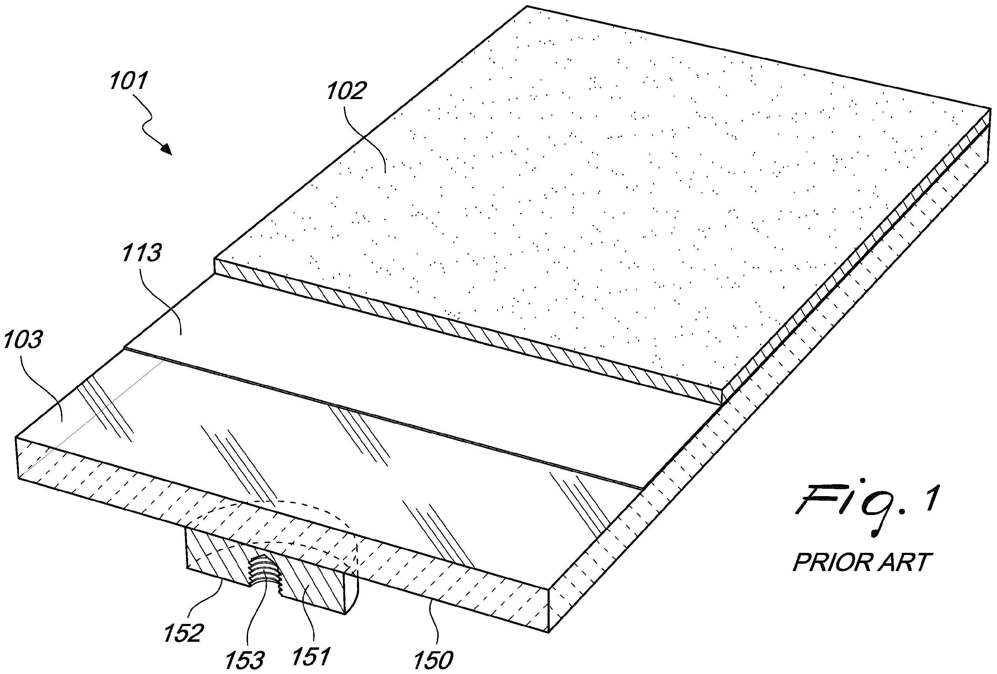

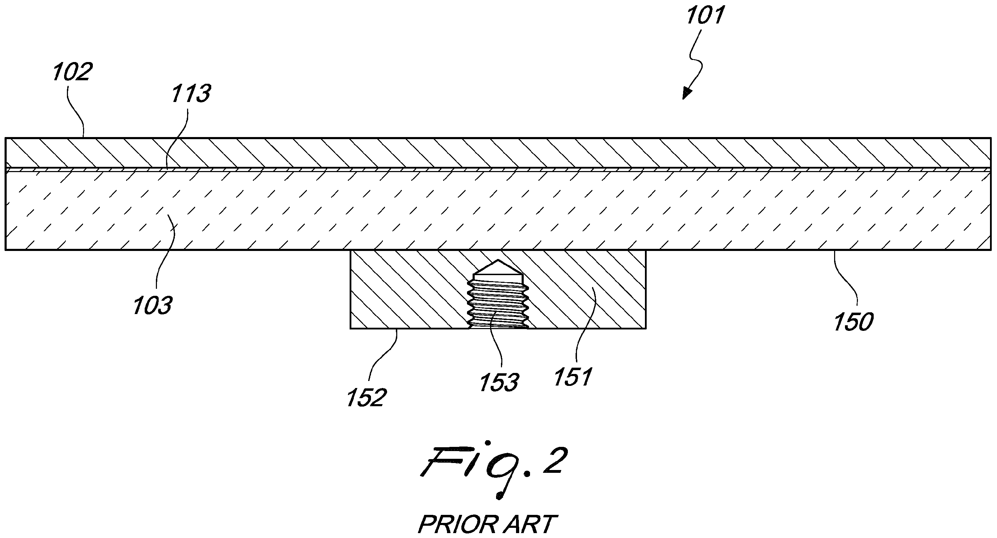

Nowadays it is known to provide, as shown in Figures 1 and 2, for example a top 101 of a table that entails bonding an upper planar element 102, for example made of stoneware, with a lower planar element 103 made of glass, by means of for example double-sided adhesives 113 or glues or by layering in an autoclave or in a vacuum.

On the lower surface 150 of the lower planar element 103 of glass, it is known to associate, for example proximate to the corners and using a two-part or UV glue, a cylindrical metal plate 151 which has, on its lower surface 152, a threaded seat 153 with which a screw is associated for locking the top 101 for example to a frame or to the table legs.

The plates thus constitute anchor points of the top 101 to the table frame or legs, or to other surfaces.

Such prior art is prone to various drawbacks: in fact even if the strength of the adhesive bonds between the metal plate 151 and the lower planar element 103 of glass is normally high, cases of separation do occur owing to improper use, or accidental causes, or even to possible major thermal shocks.

The use of glass in combination with other materials, such as steel or aluminum, in fact determines a structural instability, given that the different thermal dilation result in deformations over time that can cause the two components to separate.

The patent application EP3936326 A1 is known, which describes a panel 10, which comprises a covering plate 20 of glass and a reinforcing plate 30, which is fixed to the bearing structure 40 by way of attachment elements 50 in the form of a threaded through hole 57, coaxial with the attachment element 50, and configured to be associated with a corresponding screw 80, as an attachment counter-element.

This solution too entails a structural instability, given that tightening the screw 80 causes frequent wear, cracking and possible breakage of the surface of the covering plate 20 of glass, given that the tip of the screw 80 is in, or can come into, direct contact with the covering plate 20 of glass.

A further drawback consists of the poor resistance of the adhesive bonding against the rotation force exerted on the threaded attachment element 50 when tightening the screw 80, owing to the limited adhesive bonding surface of the head of the threaded attachment element 50.

Furthermore, during the layering operation the residues of plastic and of adhesive fall into the internal thread 57, so compromising the use of the invention, in particular by not permitting the screw 80 to be screwed in the internal thread 57 of the attachment element 50.

The patent application EP1754844 A2 is also known, which describes a glass panel, comprising an internal layer of glass and an external layer of glass, which is fixed to the fastening plate and to the frame by way of a pierced metallic bushing which has a female internal thread, coaxial with the pierced metallic bushing, which is configured to be associated with a corresponding screw, as an attachment counter-element.

This solution exhibits the same drawbacks as those of the patent application EP3936326 A1, including the structural instability caused by frequent wear, cracking and possible breakage of the surface of the internal layer of glass, the poor resistance of the adhesive bonding against the rotation force exerted on the pierced metallic bushing when tightening the screw, and the compromised use of the invention caused by the female internal thread of the pierced metallic bushing.

The aim of the present invention is therefore to solve the above-mentioned technical problems, eliminating the drawbacks in the cited prior art and therefore devising a method that makes it possible to provide multilayer tops for tables and doors and furnishings that offer a high structural stability over time.

Within the above aim, an object of the invention is to devise a method that makes it possible to provide, at low cost, multilayer tops for tables and doors and furnishings that offer a high structural stability over time.

Another object is to obtain a method for obtaining multilayer tops for tables and doors and furnishings which is simple and rapid to implement.

This aim and these and other objects which will become better apparent hereinafter are achieved by a method for providing multilayer tops for tables and doors and furnishings and partitions, characterized in that it comprises the steps of:
- obtaining a first, upper planar element made of ceramic material or glass or laminate or veneer or sheet metal or laminated plastic;
- obtaining a second, lower planar element made of ceramic material or glass or laminate or sheet metal or laminated plastic;
- obtaining on said second, lower planar element at least one through seat which has a first region which is shaped like an inverted frustum or parallelepiped followed by a second region which is cylindrical;
- inserting in said at least one through seat a complementarily-shaped insert, such as a bushing which has a shape the head of which is shaped complementarily to said first region and the stem of which is shaped complementarily to said second region, at the lower surface of said stem there being a blind threaded slot which is provided axially;
- coupling said first, upper planar element and said second, lower planar element so as to obtain said multilayer top.

Similar aims and objects are achieved by a multilayer top for tables and doors and furnishings and partitions, characterized in that it comprises a first, upper planar element made of ceramic material or glass or laminate or veneer or sheet metal or laminated plastic, coupled to a second, lower planar element made of ceramic material or glass or laminate or sheet metal or laminated plastic, on said second, lower planar element made of glass or ceramic there being at least one through seat for a complementarily-shaped insert, such as a bushing, said through seat having a first region which is shaped like an inverted frustum or parallelepiped followed by a second region which is cylindrical, said bushing having a shape the head of which is shaped complementarily to said first region and the stem of which is shaped complementarily to said second region, at the lower surface of said stem there being a blind threaded slot which is provided axially.

Further characteristics and advantages of the invention will become better apparent from the detailed description of a particular, but not exclusive, embodiment, illustrated by way of non-limiting example in the accompanying drawings wherein:
Figure 1 is a partially cross-sectional perspective view of an example of the prior art;
Figure 2 is a transverse cross-sectional view of the embodiment of Figure 1;
Figure 3 is a partially cross-sectional exploded view of a first, upper planar element, a second, lower planar element in which a seat is provided, and a bushing, all constituting a multilayer top;
Figure 4 is a similar view to the previous figure, in the condition in which the bushing is inserted in the seat;
Figure 5 is a partially cross-sectional perspective view of the assembled components of the multilayer top;
Figure 6 is a cross-sectional view of the multilayer top of the previous figure, taken along a diametrical plane passing through the seat;
Figure 7 is a perspective view of the bushing;
Figure 8 is a partially cross-sectional perspective view of a different embodiment for the bushing;
Figure 9 shows the bushing of the previous figure;
Figure 10 is a partially cross-sectional exploded view of the components of the multilayer top of Figures 8 and 9;
Figure 11 is a similar view to the previous figure, in the condition in which the bushing is inserted in the seat.

In the embodiments illustrated, individual characteristics shown in relation to specific examples may in reality be interchanged with other, different characteristics, existing in other embodiments.

With reference to the figures, the reference numerals 1, 1^{I} designate a multilayer top for tables or for doors or in general for a furniture component, which is obtained using a method that entails a first step of obtaining a first, upper planar element 2 made of ceramic material, such as for example stoneware, or glass, for example tempered glass, or laminate or veneer or sheet metal or laminated plastic.

The method then entails a second step, simultaneous with or previous to the first step, of obtaining a second, lower planar element 3, 3^{I} made of ceramic material or glass, for example tempered glass, or laminate or sheet metal or laminated plastic.

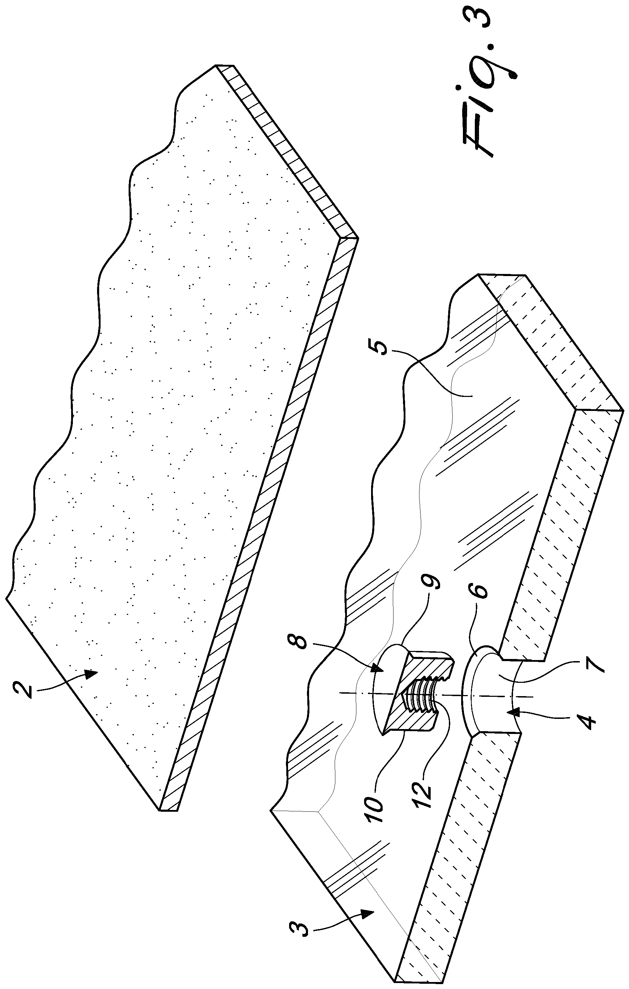

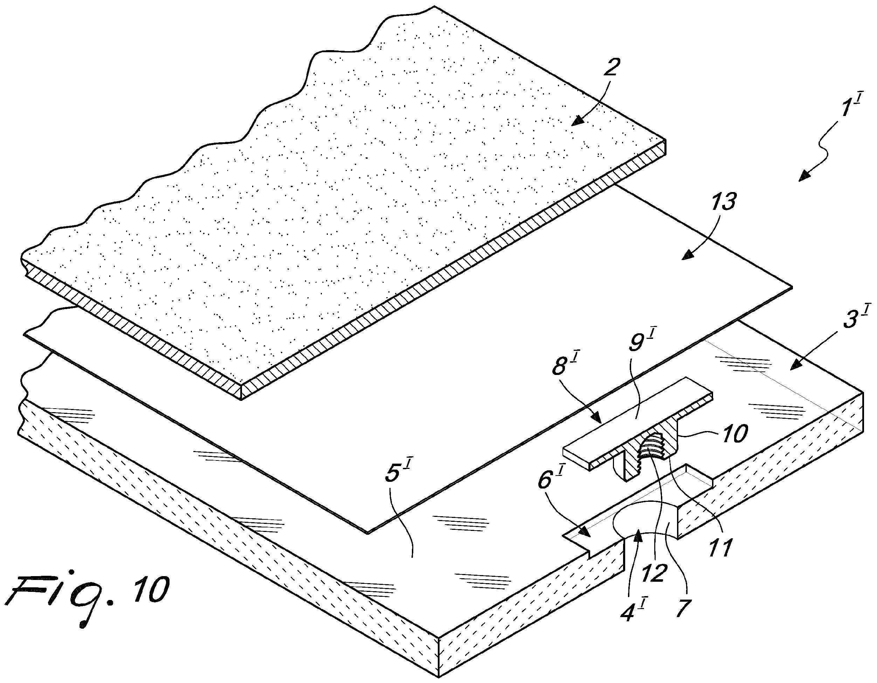

The method then entails a third step of obtaining, on the second, lower planar element 3, 3^{I}, at least one through seat 4, 4^{I}, as shown in Figure 3 and in Figure 10.

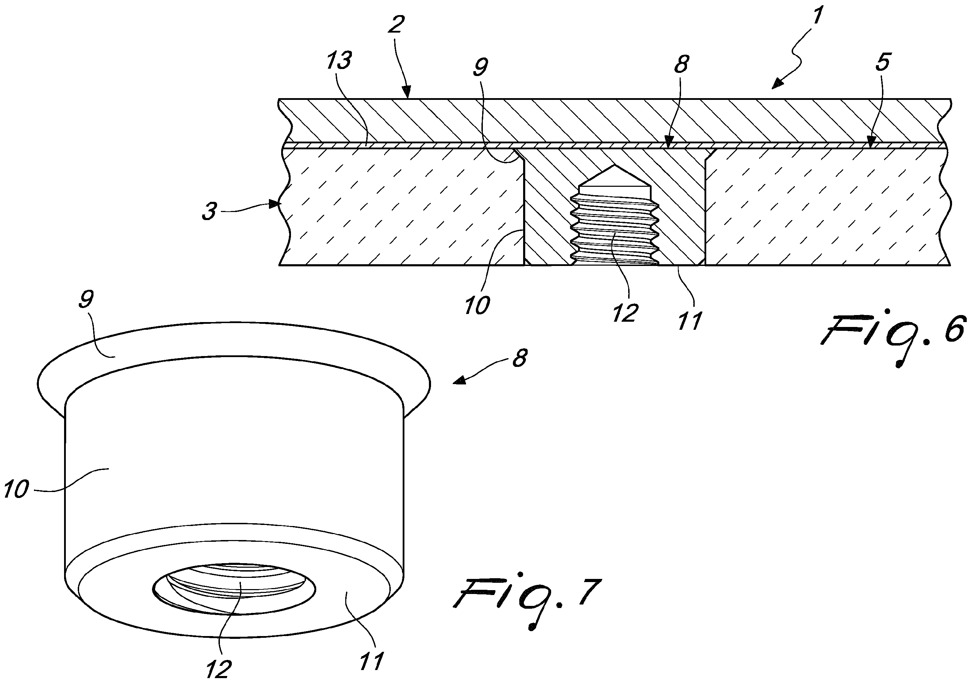

In the embodiments illustrated in Figures 3 to 11, a through seat 4, 4^{I} is provided on which there is, starting from the upper surface 5, 5^{I} of the second, lower planar element 3, 3^{I}, a first region 6, 6^{I} which is shaped like an inverted frustum or parallelepiped followed by a second region 7, which is cylindrical.

In the embodiment shown in Figures 3 to 7, the first region 6 is shaped like an inverted frustum.

The first region 6, as shown in Figures 3 to 7, has a shape in which the larger end face of the frustum lies on the upper surface 5 of the second, lower planar element 3 and the smaller end face is inside (contained in) the second, lower planar element 3.

The size of the first region 6 will vary as a function of the specific requirements.

The second region 7 advantageously has a diameter equal to that of the smaller end face of the frustum defined by the first region 6.

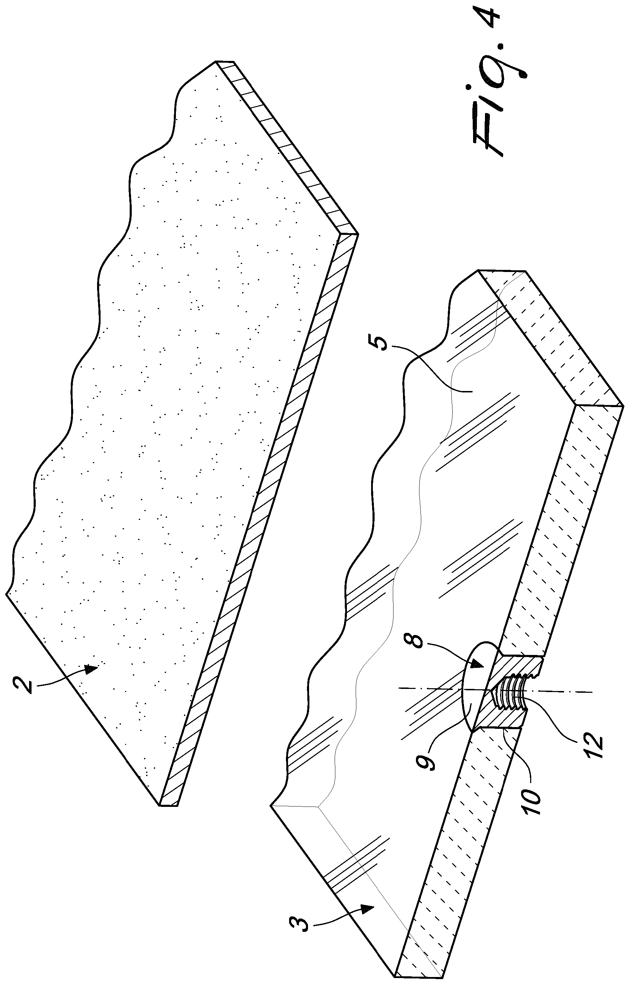

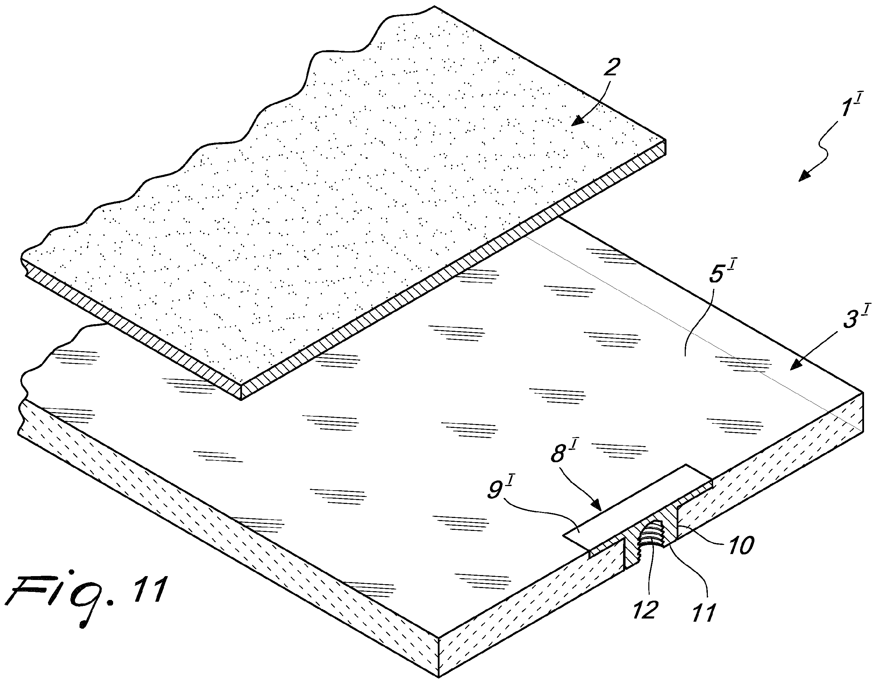

The method then entails a fourth step, shown in Figure 4 and in Figure 11, of inserting, in the at least one through seat 4, 4^{I}, a complementarily-shaped insert, metallic or made of plastic material, constituted by a bushing 8, 8^{I}.

Such bushing 8, 8^{I} is for example made of steel or aluminum or other strong material and has a shape in which the head 9, 9^{I} is shaped complementarily to the first region 6, 6^{I} and in which the stem 10 is shaped complementarily to the second region 7.

The head 9, 9^{I} is therefore positioned flush with the upper surface 5, 5^{I} of the second, lower planar element 3, 3^{I}.

At the lower surface 11 of the stem 10 there is a blind threaded slot 12 which is provided axially.

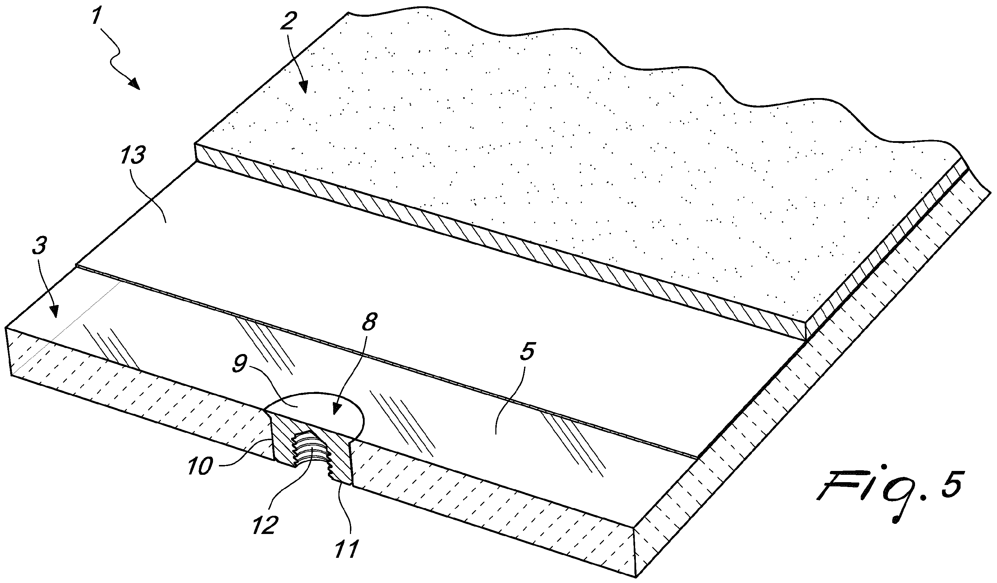

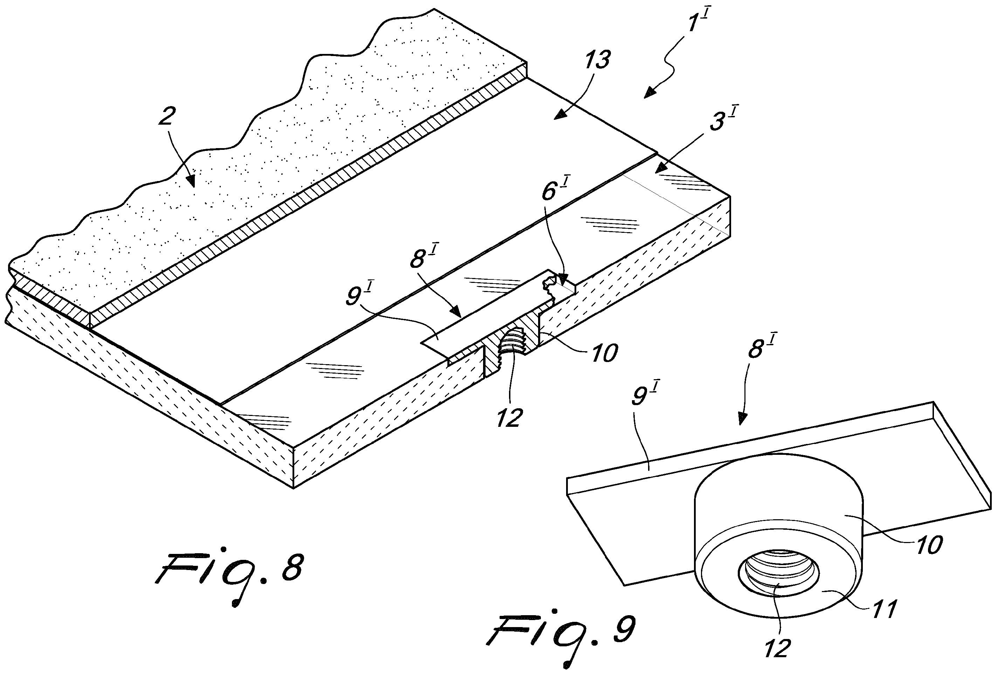

The method then entails a fifth step, shown in Figure 5 and in Figure 8, which entails a coupling of the first and second planar element 2, 3, 3^{I} so as to obtain the multilayer top 1, 1^{I}.

The coupling, or layering of the first and second planar element 2, 3, 3^{I}, occurs for example by means of the use of adhesives 13 or glues or in a vacuum or in an autoclave.

The method makes it possible to obtain a multilayer top 1, 1^{I} that can be coupled rapidly and safely to tables and doors and furnishings and partitions, given that once the first, upper planar element 2 and the second, lower planar element 3, 3^{I} are mutually layered, the bushing 8, 8^{I} becomes captive and, by coupling thereto adapted complementarily-threaded screws to the tables or doors or furnishings, it will withstand the traction or shear forces perpendicular to the multilayer top 1, 1^{I}.

It will in addition withstand the rotation forces generated by screwing, by virtue both of the adhesion of the head 9, 9^{I} of the bushing 8, 8^{I} to the adhesive 13, and also of the friction between the bushing 8, 8^{I} and the walls of the through seat 4, 4^{I}.

In practice it has been found that the invention has fully achieved the intended aim and objects, a method having been obtained that makes it possible to provide multilayer tops for tables and doors and furnishings that offer a high structural stability over time.

It has also been found that the invention has fully achieved the intended aim and objects, a multilayer top 1, 1^{I} for tables and doors and furnishings having been obtained that offers a high structural stability over time.

In particular, such high structural stability over time is obtained by virtue of the particular shape of the bushing 8, 8^{I}, which has the blind threaded slot 12 provided axially at the lower surface 11 of the stem 10.

This shape in fact ensures a continuity of the upper surface of the head 9, 9^{I} of the bushing 8, 8^{I}, so enabling an optimal adhesion thereof to the adhesive 13 and therefore ensuring an optimal resistance of the adhesive bonding to the rotation force exerted on the bushing 8, 8^{I} when screws are tightened on it.

It has furthermore been found that this shape of the bushing 8, 8^{I} has eliminated the problems of cracking and breakage of the first, upper planar element 2 during tightening of the screw in the bushing 8, 8^{I} given that, with the blind shape structure of the threaded slot 12, the screw during tightening in the bushing 8, 8^{I} can never come into contact with the first, upper planar element 2, made of ceramic material, such as for example stoneware, or glass, and so accidentally cause its cracking.

It has furthermore been found that during the layering operation the residues of plastic and of adhesive have no access to the interior of the threaded slot 12, so ensuring the correct use of the invention.

The method is furthermore simple and rapid to carry out and makes it possible to provide, at low cost, multilayer tops for tables and doors and furnishings.

Naturally the materials used as well as the dimensions of the individual components of the invention may be more relevant according to specific requirements.

The various means of achieving certain different functions certainly need not coexist only in the embodiment shown, but may be present in many embodiments, even if they are not shown.

The through seat 4, 4^{I} and the first region 6, 6^{I} can furthermore have other shapes in plan view such as, for example, a polygonal shape or a T-shape, so as to accommodate a complementarily-shaped insert constituted for example by a nut or by a T-shaped bushing.

In the specific embodiment shown in Figures 8 to 11, the through seat 4^{I} is T-shaped in plan view.

In this embodiment, the first region 6^{I} has a parallelepiped shape with a rectangular plan, which accommodates the complementarily-shaped head 9^{I} of the bushing 8^{I}, which therefore is substantially T-shaped.

The first region 6^{I}, as illustrated in Figure 10, has a shape in which the upper end face of the parallelepiped lies on the upper surface 5^{I} of the second, lower planar element 3^{I} and the lower end face of the parallelepiped is inside (contained in) the second, lower planar element 3^{I}.

The size of the first region 6^{I} will vary as a function of the specific requirements.

The bushing 8^{I} is for example made of steel or aluminum or other strong material and has a shape in which the head 9^{I} is shaped complementarily to the first region 6^{I} and in which the stem 10 is shaped complementarily to the second region 7.

The head 9^{I} is therefore positioned flush with the upper surface 5^{I} of the second, lower planar element 3^{I}.

At the lower surface 11 of the stem 10 there is an axially provided blind threaded slot 12.

The steps of the method and the aims and objects achieved are similar to those of the first embodiment.

The characteristics indicated above as advantageous, convenient or the like, may also be missing or be substituted by equivalent characteristics.

The disclosures in Italian Patent Application No. 102024000000918 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A method for providing multilayer tops (1, 1^{I}) for tables and doors and furnishings and partitions, **characterized in that** it comprises the steps, which may be executed in the following sequence or in a different one, of:
- obtaining a first, upper planar element (2) made of ceramic material or glass or laminate or veneer or sheet metal or laminated plastic;
- obtaining a second, lower planar element (3, 3^{I}) made of ceramic material or glass or laminate or sheet metal or laminated plastic;
- obtaining on said second, lower planar element (3, 3^{I}) at least one through seat (4, 4^{I}) which has a first region (6, 6^{I}) which is shaped like an inverted frustum or parallelepiped followed by a second region (7) which is cylindrical;
- inserting in said at least one through seat (4, 4^{I}) a complementarily-shaped insert, such as a bushing (8, 8^{I}) which has a shape the head (9, 9^{I}) of which is shaped complementarily to said first region (6, 6^{I}) and the stem (10) of which is shaped complementarily to said second region (7), at the lower surface (11) of said stem (10) there being a blind threaded slot (12) which is provided axially;
- coupling said first, upper planar element (2) and said second, lower planar element (3, 3^{I}) so as to obtain said multilayer top (1, 1^{I}).

2. The method according to claim 1, **characterized in that** said at least one seat (4, 4^{I}) is obtained starting from the upper surface (5, 5^{I}) of said second, lower planar element (3, 3^{I}).

3. The method according to claim 1, **characterized in that** said first region (6) has a shape in which the larger end face of the frustum lies on the upper surface (5) of said second, lower planar element (3) and the smaller end face is inside said second, lower planar element (3).

4. The method according to claim 1, **characterized in that** said first region (6^{I}) has a shape in which the upper end face of the parallelepiped lies on the upper surface (5^{I}) of said second, lower planar element (3^{I}) and the lower end face of the parallelepiped is inside (contained in) said second, lower planar element (3^{I}).

5. The method according to claim 1, **characterized in that** it provides for the insertion, into said at least one through seat (4, 4^{I}), of a complementarily-shaped insert, metallic or made of plastic material, constituted by said bushing (8, 8^{I}).

6. The method according to claim 1, **characterized in that** said at least one seat (4^{I}) is substantially T-shaped.

7. A multilayer top (1, 1^{I}) for tables and doors and furnishings and partitions, **characterized in that** it comprises a first, upper planar element (2) made of ceramic material or glass or laminate or veneer or sheet metal or laminated plastic, coupled to a second, lower planar element (3, 3^{I}) made of ceramic material or glass or laminate or sheet metal or laminated plastic, on said second, lower planar element (3, 3^{I}) made of glass or ceramic there being at least one through seat (4, 4^{I}) for a complementarily-shaped insert, such as a bushing (8, 8^{I}), said through seat (4, 4^{I}) having a first region (6, 6^{I}) which is shaped like an inverted frustum or parallelepiped followed by a second region (7) which is cylindrical, said bushing (8, 8^{I}) having a shape the head (9, 9^{I}) of which is shaped complementarily to said first region (6, 6^{I}) and the stem (10) of which is shaped complementarily to said second region (7), at the lower surface (11) of the stem (10) there being a blind threaded slot (12) which is provided axially.

8. The multilayer top (1) according to claim 7, **characterized in that** said first region (6) has a shape in which the larger end face of the frustum lies on the upper surface (5) of said second, lower planar element (3) and the smaller end face is inside said second, lower planar element (3).

9. The multilayer top (1^{I}) according to claim 7, **characterized in that** said first region (6^{I}) has a shape in which the upper end face of the parallelepiped lies on the upper surface (5^{I}) of said second, lower planar element (3^{I}) and the lower end face of the parallelepiped is inside said second, lower planar element (3^{I}).

10. The multilayer top (1, 1^{I}) according to one or more of claims 7-9, **characterized in that** said head (9, 9^{I}) is positioned flush with the upper surface (5, 5^{I}) of said second, lower planar element (3, 3^{I}).

11. The multilayer top (1^{I}) according to one or more of claims 7-10, **characterized in that** said insert shaped complementarily to said at least one through seat (4^{I}) is constituted by a T-shaped element.

12. The multilayer top (1^{I}) according to one or more of claims 7-11, **characterized in that** said first region (6^{I}) has a parallelepiped shape with a rectangular plan, which accommodates said complementarily-shaped head (9^{I}) of said bushing (8^{I}), which therefore is substantially T-shaped.
